## Europäisches Patentamt

(19) **European Patent Office**

**Office européen des brevets**

(11) Publication number: **0 008 921**
**A1**

(12) # EUROPEAN PATENT APPLICATION

(21) Application number: **79301759.1**

(22) Date of filing: **28.08.79**

(51) Int. Cl.³: **G 01 N 31/08**

(30) Priority: **08.09.78 GB 3606378**

(43) Date of publication of application:
**19.03.80 Bulletin 80/6**

(84) Designated Contracting States:
**AT BE CH DE FR GB IT NL SE**

(71) Applicant: **WRIGHT SCIENTIFIC LIMITED**
**22 St. Andrew Street**
**London EC4A 3AN(GB)**

(72) Inventor: **Wright, Alfred George**
**Upper Mill**
**Stonehouse, Gloucester GL10 2BJ(GB)**

(74) Representative: **Jack, Bruce James et al,**
**FORRESTER & BOEHMERT Widenmayerstrasse 5 IV**
**D-8000 Munchen 22(DE)**

(54) Column chromatography and like processes and apparatus for the practice thereof.

(57) A method of practising column chromatography and like techniques with a column bed of pervious material contained in a tubular column support (1) and having its ends engaged by end cells (6, 9, 10; 20, 26, 27) is characterised by at least one end cell (20, 26, 27) being movable relatively to the column support (1) and being resiliently urged into continual engagement with the adjacent end of the bed, thus accommodating any changes in the volume of the bed.

Also disclosed are methods of packing a column support with pervious material to form a bed for the practice of column chromatography or the like, involving resiliently urging a movable end cell into engagement with an adjacent end of a body of pervious material in fluent condition.

Column apparatus suitable for performing these methods is also disclosed.

BAD ORIGINAL

EP 0 008 921 A1

./...

Fig1

Fig2

"Column chromatography and like processes and apparatus for the practice thereof"

THIS INVENTION concerns column chromatography and like techniques - such as gel filtration and ion-exchange procedures - in which liquids are caused to flow through a columnar bed of pervious material in order to effect physical and/or chemical reactions between the bed material and the constituents of the liquid. For convenience of discussion, the invention will be described mainly in terms of column chromatography although it necessarily has many other applications in the practice of the analogous techniques that use columnar beds of pervious material.

Column chromatography and analogous techniques are used in the laboratory for the separation and resolution of the constituents of mixtures and are powerful analytical tools for achieving the separation of components of complex mixtures of biological and biochemical materials. The techniques are also being used to an increasing extent in the preparation and purification of complex organic compounds such as enzymes and hormones - e.g. insulin for therapeutic use.

These techniques are practised in an apparatus providing support for a columnar bed of pervious material. The apparatus is available and used in a wide range of cross-sectional sizes, the apparatus used for instance in the large-scale production of pharmacological materials sometimes providing a columnar bed of pervious material having a diameter of several hundreds of millimetres.

The successful operation of a chromatographic or like column to achieve sharp separations between constituents of a mixture depends upon the avoidance of flow gradients and other irregularities transverse to the column axis. For this reason care has to be taken to introduce the various fluids (mixture and eluent) at uniform rates across the whole cross-section of the column and similarly to withdraw fluids uniformly across the whole cross-section of the column at the opposite end thereof. The achievement of these operational desiderata depends to a large extent upon the absence of so-called "dead spaces" at the ends of the column – that is to say, spaces in which fluids can flow non-uniformly with respect to the column axis. Modern column apparatus designs therefore utilise end cells intended to abut against the respective opposite ends of the bed of pervious material and that provide a controlled flow path for fluids passing between the bed and input and offtake fluid connections to the end cells.

For correct performance of such apparatus it is important that the end cells should always remain in proper co-operative relationship with the ends of the bed of pervious material. It is therefore now customary to arrange for at least one end cell to be adjustably mounted with respect to the tubular column support in order that it may be correctly positioned in relation to, usually in contact with, the adjacent end of the bed.

In a number of column chromatographic and like processes, the bed of pervious material undergoes physico-chemical reaction with the fluids that are passed through the bed and in certain instances these reactions result in substantial volumetric changes occurring in the bed material. There is, therefore, a tendency for the bed to shrink and/ or expand during the operation and whereas it is practicable, if inconvenient, in laboratory procedures involving a continually observed column to maintain the required relationship between the bed ends and the end cells by continually altering the position of an adjustable end cell to accommodate bed volume changes, for large apparatus intended for large-scale operation, e.g. for volume production of pharmacological material, repeated manual intervention and adjustment of the apparatus can be unacceptably wasteful of operator time. Moreover in the intervals between each intervention for end cell adjustment there will necessarily be periods of time in which the end cell is significantly out of position and the column, therefore, running under non-optimum conditions.

An objective of the present invention is therefore to provide methods by which column chromatography and like techniques may be practised with greater ease and precision in terms of obtaining and maintaining correct column operating parameters than hitherto. A further objective is to provide methods by which a column support may be packed with pervious material to form a bed for the practice of column chromatography or the like in which the particle size distribution and porosity is substantially uniform throughout its length. Another objective is to provide apparatus adapted for performing these methods.

In one aspect, therefore, the present invention provides a method of practising column chromatography and like techniques with a columnar bed of pervious material contained in a tubular column support and having its ends engaged by end cells, characterised in that at least one end cell is movable relatively to the column support and is resiliently urged into continual engagement with the adjacent end of the bed.

If, as will often be the case, fluids are applied to and/or exhaust from the bed under appreciable gauge pressure, the end cells must provide adequate sealing against the unwanted flow of fluid between the cells and the walls of the column support. Preferably, therefore, the or each movable end cell is slidably sealed in the column support.

The resilient thrust upon a movable end cell may be obtained in a variety of ways. For instance one or more springs or equivalent devices may be arranged to apply mechanical thrust upon the end cell. However, in general such arrangements will only provide for relatively small movements of the end cell owing to the difficulty of accommodating spring or equivalent devices having a rate characteristic such that significant movement of the end cell will not unacceptably alter the thrust upon the end cell and disturb operation of the column.

Therefore, in preferred practice of the method of the invention, the or each movable end cell is slidably sealed in the column support and is made subject to fluid pressure acting to urge the cell towards the adjacent end of the bed.

Conveniently the fluid pressure applied to a movable end cell derives from fluid to be passed to, or passing from, the bed. Thus, for instance, an eluent being pumped to the bed under appreciably gauge pressure may also be applied, directly or indirectly, to a pressure chamber behind a movable end cell. If such eluent is being passed to the bed through the movable end cell in question, the arrangement will be such as to provide an appropriately higher pressure in said pressure chamber than at the end of the bed engaged by the end cell.

The invention also provides methods of packing a column support with pervious material.

It is known to pack a column support by admitting a quantity of fluent, e.g. slurried, pervious bed material to a column support and allowing the bed material to settle by gravity. In some cases, gas pressure is applied to the support above the slurried bed material after introduction to the column support to cause the bed material to settle more quickly than by gravity. With most bed materials, however, the particles are not of completely uniform size and weight, with the consequence that particles of different sizes and weights tend to settle out at different rates, tending to produce a bed in which there is a changing particle size distribution along the length thereof, leading to discontinuities in the properties of the bed in its length.

Accordingly in another aspect the invention provides a method of packing a column support with pervious material to form a bed for the practice of column chromatography or the like, comprising introducing pervious material in fluent condition into the column support, engaging an end of said fluent material with an end cell movable relatively to the column support, and applying force to said end cell to urge the same resiliently towards the fluent material to effect compaction thereof.

In the practice of this method, fluid may be introduced into the fluent material, or be removed therefrom, through said movable end cell in order to control the packing of the pervious material particles as the fluent material is compacted by the thrust applied by the end cell, it being understood that fluid must not be removed from the fluent material being compacted at a rate greater than the rate of expulsion of fluid caused by compaction.

With this method, compaction of the fluent material by the thrust of the movable end cell causes rapid settlement of the material, and a bed with substantially uniform particle size distribution and porosity throughout its length can be formed in a time substantially shorter than is required for conventional techniques.

The invention also provides a method of packing a column support with pervious material to form a bed for the practice of column chromatography or the like, comprising continuously introducing pervious material in fluent condition into the column support while maintaining the forming bed under pressure applied through an end cell movable relatively to the column support and continually urged resiliently towards the adjacent end of the bed.

Preferably the force applied to said end cell results from the application of fluid pressure thereto. In the practice of this method, fluid may be introduced into the fluent material, or allowed to escape from the fluent material, through the said movable end cell in order to control the packing of the pervious material particles as the fluent material is compacted by the thrust applied by the end cell.

By this latter method, the fluent pervious material is continuously introduced into the column support while under pressure, applied by the movable end cell, that causes rapid settlement of the entering material into a succession of very thin elementary layers so that the formed bed is of substantially uniform particle size distribution and porosity throughout its length.

Conveniently the fluent pervious material is introduced into the column support through the movable end cell, this being arranged to be displaced upwardly against the resilient downthrust that urges the cell against the end of the forming bed.

The invention also provides apparatus suitable for the performance of these methods of the invention.

Thus in another aspect the invention provides column apparatus comprising a column support for containing a bed of pervious material and end cells for engaging the opposite ends of the said bed, characterised in that at least one of said end cells is movable relatively to the column support and is adapted to be urged resiliently into continual engagement with the adjacent end of the said bed.

Preferably the or each movable end cell is slidably sealed in the column support.

In preferred embodiments, the or each movable end cell comprises a piston movable in the column support and dividing the latter into a bed space and a pressure chamber, and the apparatus includes means for applying fluid pressure to the pressure chamber to urge the piston towards the bed space.

Various arrangements may be utilised to effect a slidable seal between the piston and the wall of the column support but it is preferred to use a lip seal arrangement, the piston or a part carried thereby carrying or being formed with a flange to constitute a lip seal slidable on the wall of the column support.

In a preferred construction, the movable end cell comprises a porous disc that is removably carried by a detachable holder. In this construction, the detachable holder conveniently carries or is formed with seal means, e.g. a flange constituting an external lip seal, for engaging the wall of the column support. This seal means may constitute the entire sealing arrangement for the piston or may supplement another seal means on the piston itself.

In the preferred construction, the said holder is attachable to the piston with or without the porous disc so as to enable the latter to be omitted from the end cell assembly during packing of the column support by the above-discussed method involving admitting fluent pervious material to the column support through the movable end cell.

The movable end cell preferably includes a fluid passage sealingly connected to a rigid tube extending parallel with the axis of the column support and extending movably and sealingly through a wall defining the pressure chamber.

Various other features and advantages of apparatus embodying the invention for the practice of the methods thereof will appear from the following description of an embodiment of the apparatus.

An embodiment of column chromatographic or like apparatus suitable for performing the methods of the invention is illustrated in the accompanying drawing in which:

FIGURE 1 is a part sectional exploded elevation of the apparatus; and

FIGURE 2 is an enlargement of that part of the sinter holder within the circle "A" in Figure 1.

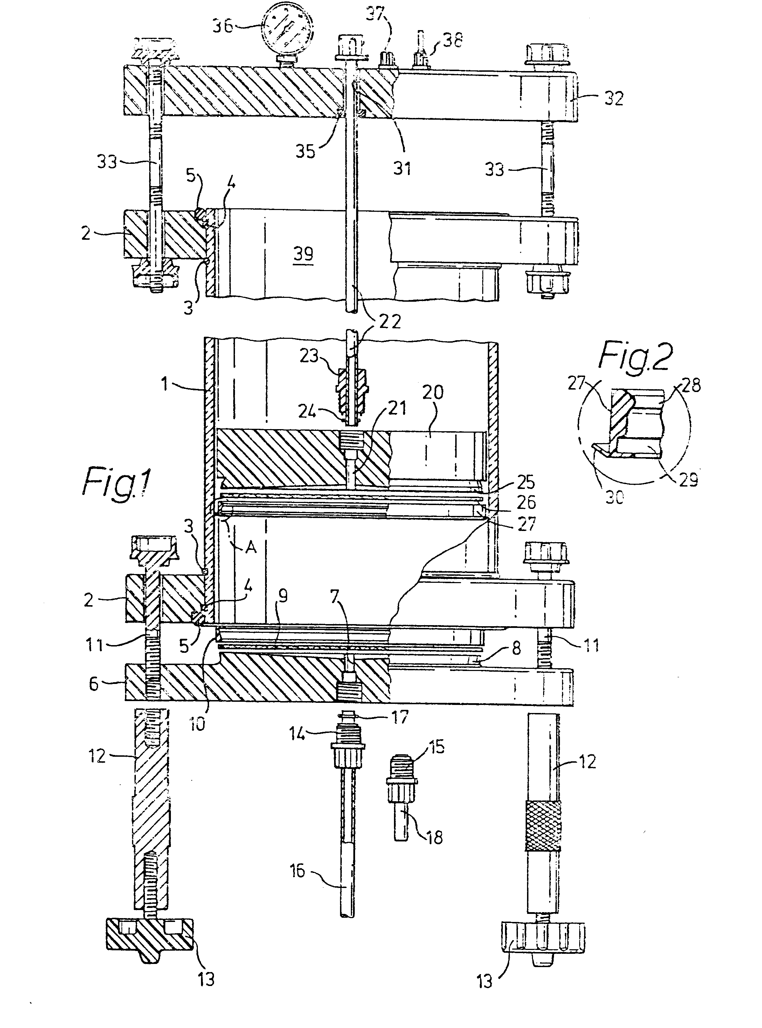

Figure 1 illustrates in part sectional elevation an apparatus comprising a tubular column support 1 that may be of any desired length and any desired diameter in order to contain a pervious material bed (not shown) of required length and cross-section for a particular chromatographic or like procedure to be practised therewith.

The column support 1 may be formed of glass, e.g. borosilicate glass, or of suitable plastics material, e.g. acrylic resin, or of any of the other transparent or translucent materials conventionally used for such purposes, the use of such materials enabling a user to observe the bed of pervious material in the support while a chromatographic or like process is being practised and, in particular, to monitor whether the end cells are correctly positioned for proper co-operative relationship with the ends of the bed of pervious material in the column support.

It should be noted, however, that when practising column chromatography or like techniques by the method of the invention, the resilient urging of the movable end cell ensures that the end cell is maintained in continual engagement with the adjacent end of the bed, and a user can therefore be confident that the end cell is being maintained in proper co-operative relationship with the end of the bed without having to verify this by observation. It is accordingly not necessary for the column support of apparatus of the invention to be made of transparent or translucent material, as was hitherto the case, and the column support 1 may thus be formed of. any suitable material, regardless of its properties of light transmission, including such materials as stainless steel from which columns can be made that have a greater uniformity of bore cross section than is possible with the conventionally used transparent and translucent materials.

At each end, the column support 1 is fitted with a flange 2 secured to the support 1 through the intermediary of circlips 3 and collet rings 4 engaging in peripheral grooves in the support 1. Each flange 2 has an end face approximately aligned with the adjacent end of the support 1, this flange face being formed with a groove to receive an O-ring or like seal 5.

In the illustrated embodiment, the lower end of the column support 1 is provided with a fixed end cell constituted by an end plate 6 having a central fluid passage 7 that extends axially of a spigot 8 the peripheral wall of which is reversely tapered so as to be wider at its extremity than at its junction with the plate 6. The exposed face of the spigot 8 is dished and ribbed to define radial fluid flow paths from the passage 7 to the periphery of spigot. The end cell further comprises a porous disc 9 formed, for instance, of sintered polyethylene and a sinter holder 10 in the form of a flanged resilient ring shaped to fit over the porous disc 9 and the spigot 8 so as to retain the porous disc 9 in contact with the end face of the spigot. It will be seen that the internal face of the cylindrical portion of the sinter holder 10 is shaped so as to be complementary to the reverse taper on the spigot 8 and thereby engage the latter with a snap-ring action.

In the assembled condition, the end plate 6 is clamped against the adjacent lower end flange 2 by means of a ring of clamp bolts 11 that screw into legs 12 in a manner that is evident from the drawing. The seal 5 is thus compressed between the outer surface of the end of the support 1, the flange 2 and the end plate 6 to form a fluid-tight seal between these components, the sinter holder 10 being therefore positioned just within the lower end of the column support 1 and fitting the bore thereof.

The pervious bed material is packed in the column support 1 so as to rest upon the porous disc 9 that thereby defines the lower end face of the bed.

As shown, the legs 12 are fitted with screwed adjuster feet 13 by means of which the assembled column apparatus may be arranged on a suitable supporting surface and adjusted into an accurately vertical attitude.

The fluid flow passage 7 in the end plate 6 is formed in three parts of successively increasing diameter, the outermost, largest diameter, part being screwthreaded to receive, interchangeably, a tubing nipple 14 or a tubing connector 15. The tubing nipple 14 provides a through bore for flexible tubing 16 that extends into the intermediate part of the passage 7 and through an O-ring 17 that is trapped between the nipple 14 and the shoulder at the junction between the screwthreaded and intermediate parts of the passage 7 so that tightening of the nipple 14 into the screwthreaded part of the passage deforms the O-ring 17, and consequently the tubing 16 where embraced by the O-ring 17, to secure the tubing fluid tightly in the passage 7 with the bore of the tubing directly communicating with the inermost, smallest bore, part of the passage 7.

The tubing connector 15 has a tubular spigot 18 over which a tube end may be fitted when it is desired to connect tubing of larger bore to the passage 7.

The other, upper, end of the column support 1 is fitted with a self-adjusting end cell to enable the practice of the methods of the invention. This self-adjusting end cell is constituted, in the illustrated embodiment, by a piston 20 that is sized to be freely slidable within the bore of the support 1. The piston 20 has a central fluid passage 21 of a configuration similar to that of the passage 7 in the end plate 6 and is connected to a rigid tube 22 by means of a connector nipple 23 and sealing ring 24 in a manner analogous to the connection of the tubing 16 to the passage 7.

As shown, the lower end face of the piston 20 is formed with a spigot 25 similar in configuration to the spigot 8 on the end plate 6, the end face of the spigot 25 being dished and ribbed in similar manner to the end face of the spigot 8. A porous disc 26, e.g. of sintered polyethylene, is held against the end face of the spigot 25 by means of a sinter holder 27 that fits over the spigot 25 and has an internal rib 28 to snap over the reverse tapered periphery of the spigot 25, and an internal groove 29 to receive and secure the edge of the porous disc 26.

The sinter holder 27 differs from the sinter holder 10 in being formed, in this embodiment, with a projecting flange 30 shaped to form a lip seal against the bore surface of the column support 1 for the purpose of preventing leakage past the piston 20.

It is found that a flange of the configuration illustrated provides an adequate seal in a small diameter column support of glass or similar material. It is possible, however, that different sealing arrangements may be required to produce an adequate seal in circumstances in which there is a greater variation in the bore cross section of the column support, e.g. with large diameter columns.

The tube 22 extends through a central passage 31 in an end plate 32 that in the assembled condition of the apparatus is clamped against the flange 2 at the adjacent end of the column support 1 by means of a ring of clamping bolts 33, the sealing ring 5 providing a fluid-tight seal between the flange 2, end plate 32 and the upper extremity of the column support 1. An O-ring or equivalent seal 35 is fitted in a recess in the passage 31 and provides fluid-tight sealing between the tube 22 and the end plate 32 without hindering movement of the tube 22 in response to movement of the piston 20 within the column support 1.

The end plate 32 is fitted with a pressure gauge 36 and with tubing connections 37, 38 all communicating with the underside of the end plate 32 so as thereby to communicate with the pressure chamber 39 defined within the column support 1 above the piston 20.

In setting up the illustrated apparatus for use in practising, for instance, a chromatographic separation technique, the apparatus is assembled without the porous disc 26 in place, and is adjusted into a vertical attitude. The piston 20 is moved to a position near to the bottom of the support 1 so that there is only a small bed space between it and the fixed end cell disc 9.

Fluent, e.g. slurried, bed material is then introduced into the bed space by being pumped through the tube 22, to settle on the disc 9 as liquid drains through the latter and passage 7 at a rate controlled by the rate of pumping and/or suitable valve means (not shown) connected to the tubing 16 so as to prevent liquid drainage from the bottom of the forming bed exceeding the rate of liquid flow to the top of the bed in the incoming slurry. The bed material to be introduced into the bed space in this manner is maintained in a homogeneous state, for example by being continually agitated.

Fluid pressure is applied to the pressure chamber 39 above the piston 20 via one of the connections 37 or 38. This pressure, which may be derived from liquid or gas fed to the pressure chamber from a suitable source, is maintained at a value suitably above that of the fluent material entering the bed space so that the piston 20 applies a download on to the forming bed and entering fluent material, thereby to promote rapid settlement of the bed and expulsion of liquid through the disc 9. As the bed is formed, the piston 20 is forced upwardly. When the bed has attained a required length, the admission of fluent material is discontinued while pressure is maintained in the pressure chamber 39 until the bed has fully settled. Thereafter, the pressure in the pressure chamber is released and the piston 20 is withdrawn, assisted if required by applying fluid pressure to the tube 22 to develop a fluid pressure above the bed and beneath the piston.

The porous disc 26 is then installed and the piston 20 replaced in the column support, and urged downwardly into contact with the top of the bed by applying fluid pressure to the pressure chamber 39 above the piston, excess liquid and/or gas between the bed and the piston being discharged by suitable valve means (not shown) via the porous disc 26 and tube 22.

The column support 1 may instead be packed to form a bed by the alternative method discussed above. In this case, fluent, e.g. slurried, bed material is introduced, e.g. poured, into the bed space to settle on disc 9. The piston 20, with the porous disc 26 in place, is positioned to engage the upper end of the fluent material and fluid pressure is applied to the pressure chamber 39 above the piston 20 via one of the connections 37 or 38. This pressure is maintained at a suitable value such that the piston 20 applies an appropriate download on to the fluent material to cause compaction thereof with expulsion of liquid through the disc 9 and/or the tube 22. Suitable liquid, e.g. buffer solution, may be introduced, upwardly or downwardly as desired, into the fluent material being compacted, e.g. by being pumped in through tube 22, it being understood that the liquid flow must be such that liquid is not removed from the fluent material being compacted at a rate greater than the rate of expulsion of fluid caused by compaction, so that the material being compacted is not permitted to dry out; this may conveniently be achieved by, for example, pumping liquid into the fluent material through tube 22 and arranging that the outlet of tubing, e.g. tubing 16, leading from the passage 7 is at a vertical level at least as high as the source of the liquid being introduced.

After formation of the bed by one or other of the above-described methods, fluids - e.g. a sample mixture followed by eluent - are passed through the bed, upwardly or downwardly as desired, while fluid pressure is maintained in the pressure chamber 39 above the piston 20 at a value slightly in excess of the fluid pressure in the bed adjacent to the lower face of the porous disc 26. Thus, if the bed expands, the piston may be forced upwardly whereas if the bed shrinks the piston will move downwardly to maintain contact between the bed end and the disc 26.

The fluid pressure in the pressure chamber 39 may derive from any suitable source. For instance a gas, e.g. an inert gas such as nitrogen may be utilised. If gas is used to pressurise the pressure chamber, a suitable liquid is preferably introduced to fill the pressure chamber above the piston to a convenient depth and so prevent the risk of gas leakage past the seal 30 disturbing operation of the column.

Preferably, however, the fluid pressure is generated

0008921

by pumping a suitable liquid into the pressure chamber. In the case of downward elution of the column, the liquid used is conveniently eluent so that any minor leakage past the seal will be innocuous. For example, a pump may deliver eluent to a pressure reducing valve having an upstream tapping to the pressure chamber and a delivery to the tube 22 (the connection to the latter, at least, preferably including the usual bubble trap and surge-eliminating chamber) whereby a pressure differential, determined by the reducing valve, of appropriate magnitude is maintained across the piston 20.

CLAIMS

1.   A method of practising column chromatography and like techniques with a columnar bed of pervious material contained in a tubular column support (1) and having its ends engaged by end cells (6, 9, 10; 20, 26, 27), characterised in that at least one end cell (20, 26, 27) is movable relatively to the column support (1) and is resiliently urged into continual engagement with the adjacent end of the bed.

2.   A method according to claim 1, wherein said movable end cell (20, 26, 27) is slidably sealed in the column support (1).

3.   A method according to claim 2, wherein said movable end cell (20, 26, 27) is subject to fluid pressure acting to urge the cell towards the adjacent end of the bed.

4.   A method according to claim 3, wherein said fluid pressure derives from a fluid to be passed to, or passing from, the bed.

5.   A method of packing a column support (1) with pervious material to form a bed for the practice of column chromatography or the like, comprising introducing pervious material in fluent condition into the column support (1), engaging an end of said fluent material with an end cell (20, 26, 27) movable relatively to the column support (1), and applying force to said end cell to urge the same resiliently towards the fluent material to effect compaction thereof.

6.   A method of packing a column support (1) with pervious material to form a bed for the practice of column chromatography or the like, comprising continuously introducing pervious material in fluent condition into the column support (1) while maintaining the forming bed under pressure applied through an end cell (20, 26, 27) movable relatively to the column support (1) and continually urged resiliently towards the adjacent end of the bed.

7. A method according to claim 6, wherein the fluent pervious material is introduced into the column support (1) through the said movable end cell (20, 26, 27).

8. A method according to claim 5, 6 or 7, wherein the force applied to said end cell (20, 26, 27) results from the application of fluid pressure thereto.

9. Column apparatus comprising a column support (1) for containing a bed of pervious material and end cells (6, 9, 10; 20, 26, 27) for engaging the opposite ends of said bed, characterised in that at least one of said end cells (20, 26, 27) is movable relatively to the column support (1) and is adapted to be urged resiliently into continual engagement with the adjacent end of the said bed.

10. Apparatus according to claim 9, wherein said movable end cell (20, 26, 27) is slidably sealed in the column support (1).

11. Apparatus according to claim 10, wherein said movable end cell (20, 26, 27) comprises a piston (20) movable in the column support (1) and dividing the latter into a bed space and a pressure chamber (39), and means for applying fluid pressure to said pressure chamber (39) to urge the piston (20) towards the bed space.

12. Apparatus according to claim 11, wherein said piston (20) comprises a lip seal (30) co-operating with the wall of the column support (1).

13. Apparatus according to claim 10, 11 or 12, wherein said movable end cell (20, 26, 27) further comprises a porous disc (26) removably carried by a detachable holder (27).

14. Apparatus according to claim 13, wherein said detachable holder (27) carries seal means (30) for engaging the wall of the column support.

15. Apparatus according to claims 12, 13 and 14, wherein said holder (27) is formed with an external lip seal (30) and is attachable to the piston (20) with or without the porous disc (26).

16. Apparatus according to claim 11 or any claim dependent thereon, wherein said movable end cell (20, 26, 27) includes a fluid passage (21) sealingly connected to a rigid tube (22) extending parallel with the axis of the column support (1) and extending movably and sealingly through a wall (32) defining said pressure chamber (39).

*Fig.1*

*Fig.2*

0008921

European Patent
Office

EUROPEAN SEARCH REPORT

Application number

EP 79 30 1759

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US - A - 3 966 609 (E. GODBILLE)<br>* Abstract; column 1, column 2, column 3, lines 1-38 *<br>-- | 1-3,<br>9-16 | G 01 N 31/08 |
| | US - A - 3 440 864 (H.K. BLUME)<br>* Abstract; column 1, lines 20-33 *<br>-- | 1,3,9,<br>11,13 | |
| | DE - A - 2 128 090 (SIEMENS)<br>* Page 9, claim 1 *<br>-- | 6 | TECHNICAL FIELDS SEARCHED (Int.Cl.3) |
| | ANALYTICAL CHEMISTRY, vol. 31, 1959,<br>Columbus, (US)<br>W.G. JENNINGS "Device to control channeling, voids, and disruption of pressure-developed chromato-graphic columns", page 2114. .<br><br>* Complete document *<br>-- | 5,6,7 | G 01 N 31/08 |
| A | US - A - 3 511 377 (J. HRDINA)<br>* Abstract *<br>-- | 1 | |
| A | US - A - 3 692 669 (A.J. BAUMAN)<br>* Abstract *<br>-- | 1 | CATEGORY OF CITED DOCUMENTS |
| A | US - A - 4 026 803 (L. ABRAHAMS)<br>* Abstract *<br>-- | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | ./. | | &: member of the same patent family, corresponding document |

| Place of search | Date of completion of the search | Examiner |
|---|---|---|
| The Hague | 21-11-1979 | CALLEWAERT |

EPO Form 1503.1   06.78

European Patent
Office

**EUROPEAN SEARCH REPORT**

0008921
Application number

EP 79 30 1759

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>US - A - 3 483 986</u> (A.G. WRIGHT)<br><br>* Abstract; figure 13 *<br><br>-- | 1 | |
| A | <u>FR - A - 2 250 556</u> (VERRE LABO MULA)<br><br>* Revendications *<br><br>---- | 1 | |

**TECHNICAL FIELDS SEARCHED (Int. Cl. ³)**

EPO Form 1503.2   06.78